# EUROPEAN PATENT SPECIFICATION

(11) **EP 2 895 374 B1**
(45) Date of publication and mention of the grant of the patent: **30.08.2017**
(21) Application number: 13779321.2
(22) Date of filing: 11.09.2013
(51) Int. Cl.: B62B 5/08, B62B 3/02

(54) **SHOPPING TROLLEY WITH PLATFORM FOR A CHILD**
EINKAUFSWAGEN MIT PLATFORM FÜR EIN KIND
CHARIOT DE COURSES AVEC PLATEFORME POUR UN ENFANT

(30) Priority: 12.09.2012 GB 201216239
(43) Date of publication of application: 22.07.2015
(73) Proprietor: Crisp & Son Limited, Brondesbury London, NW6 7XS (GB)
(72) Inventor: CRISP, David John, London E8 1DN (GB)
(86) International application number: PCT/GB2013/000378
(87) International publication number: WO 2014/041322

(56) References cited:
- DE-U1-202011 051 444
- ES-U- 1 072 382
- US-A1- 2002 067 026
- US-A1- 2008 196 951

## Description

This invention relates to wheeled containers of the type used by shoppers.

Typically a shopping trolley consists of a frame with either a fixed or adjustable handle to provide the user with a means to push or pull the trolley, a bag attached to the frame to hold purchases or other goods, and two or more wheels at the lower end of the frame to provide easy movement on floors or pavements.

It can be very frustrating for an adult accompanied by a small child when shopping if the child becomes tired and unable or unwilling to walk at the pace of an adult. To overcome this problem a number of designs for shopping trolleys incorporating folding platforms on which a child may stand have been published; for example Shimano Patents JP2004114921A and Moratalla ES1072382U, both of which describe folding platforms pivotably attached to the rear of the trolley, with both platforms incorporating extra wheels to provide stability and support for the standing child. DE202011051444 U1 discloses shopping trolley having a container that is supported on one set of wheels and a detachable platform for supporting a child that can be clipped onto the shopping trolley; the platform includes a further set of wheels.

In use when pushing trolleys fitted with two rear wheels only, the user will typically tilt the trolley back, pivoting it about the axle of its rear wheels, so that the users feet are well clear of the lower rear end of the trolley when walking. However when a platform is unfolded to enable a child to stand, the trolley cannot then be tilted back because the top of the trolley would then encroach into the space occupied by the child's body, instead the trolley is pushed kept in an upright position forcing the user to lean forward at an uncomfortable angle in order to reach the handle and prevent their feet from striking the lower portion of the platform while walking.

The present invention is defined in claim 1 and proposes a trolley for the carriage of shopping or other goods embodying a platform on which a child may stand, comprising a container for said goods, at least one first ground engaging wheel which can freely rotate about an axis located at the rear of said container, and a platform located close to the wheel axis to support a standing child, with a handle to push or pull the trolley, the handle and container adopting one of two operative positions.

In the first operative position the container and handle are in their most upright position and the plane of the platform is at an unsuitable angle for a child to stand. In the second operative position the handle extends rearward and the container tilts forward away from its most upright position allowing the platform to adopt a substantially horizontal plane suitable for a standing child, providing sufficient space for the child's feet and body between the handle and container. To provide stability at least one second ground engaging wheel is located forward of the at least one rear wheel and may be movable between a non-ground-engaging state when the trolley is in the first operative position and a ground-engaging state when the trolley is in the second operative position.

The invention will now be described solely by way of example and with reference to the accompanying drawings in which:
Figure 1 shows the trolley in the first operative position unsuitable to convey a standing child.
Figure 2 shows the trolley in second operative position suitable to convey a standing child.

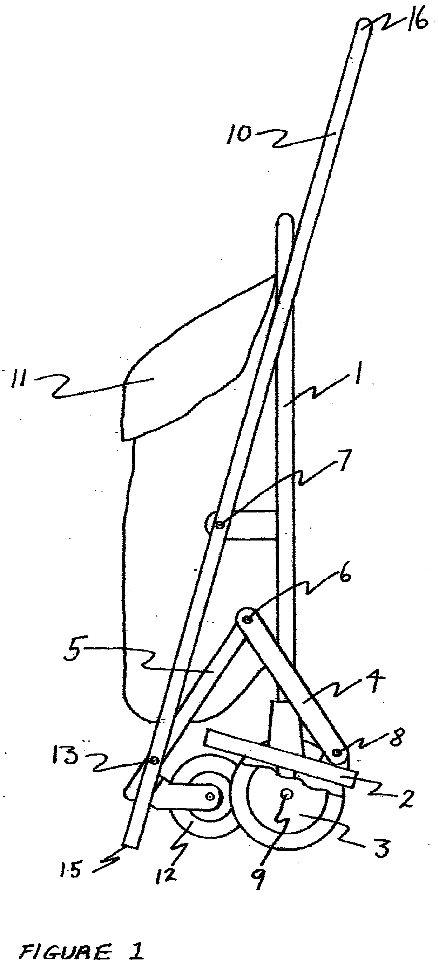

Referring to figure 1, the trolley includes a member 1, a platform 2 and at least one rear ground engaging wheel 3, that can freely rotate about an axis 9. A handle member 10 with two ends is intermediately pivotably connected to member 1 at pivot 7; the upper end of member 10 is shaped to form a handle part 16 that can be engaged by the user to push or pull the trolley 16.The lower end 15 of the handle member 1 provides a stand to support the trolley in a first operative position when not in transit (see Figure 1). The handle part 16 of the handle member 10 may be integral with the rest of the member 10 (as shown) or may have side arms (not shown) that slide telescopically within the members 10 to adjust the height of the handle part, in which case the handle member 10 should be straight and fixings (not shown) should be provided to secure the handle at a required height.

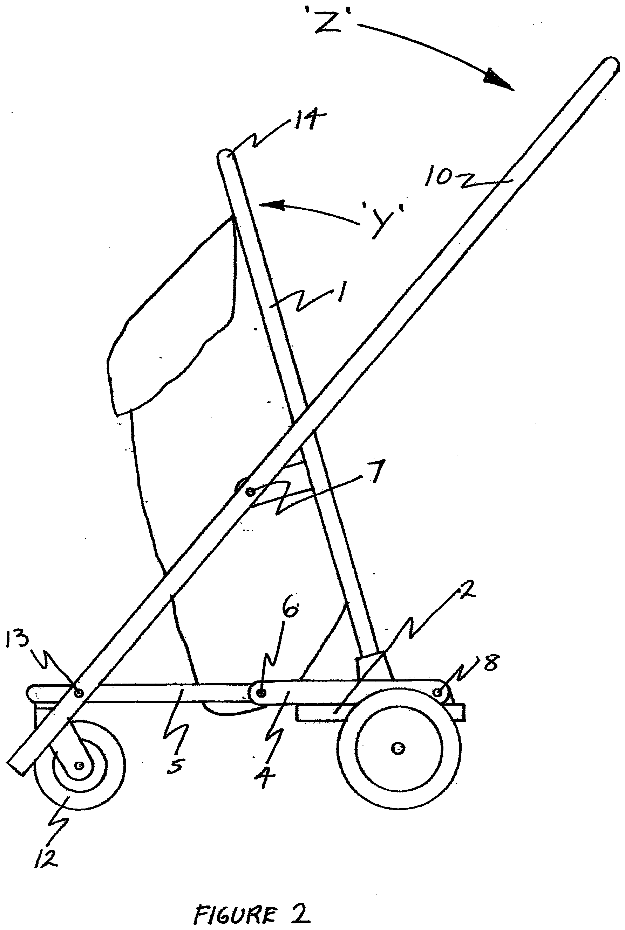

A link 4 with two ends is provided, a first end being pivotably connected 8 to platform 2 (as shown) or to member 1 (this arrangement is not shown), while a second end is pivotably connected 6 to a first end of a base member 5, base member 5 being pivotably connected 13 to handle member 10. At least one further ground engaging wheel 12 is attached to the second end of base member 5 lying beyond the pivot 13 but does not engage the ground in the first operative position shown in Figure 1 but does engage the ground in the second operative position shown in Figure 2. A goods container 11, which may have flexible or rigid outer walls, is attached to member 1; alternatively, it may be integral with member 1. Suitable conventional latches and stops are included to fasten the moving components in the first operative position.

Referring to figure 2, movement of member 10 in the direction of arrow 'Z' pivoting about pivot 7, causes link 4 and base member 5 to pivot about pivots 8, 6, and 13 to straighten, bringing the second at least one ground engaging wheel 12 into ground contact, and member 1 to move in the direction of arrow 'Y' causing the platform 2 to adopt a substantially horizontal plane suitable for a child to stand upon. Conveniently the top of member 1 may be shaped to form a handle 14 for the standing child to hold. Preferably to provide easier manoeuvrability the second at least one ground engaging wheel is a castor.

The axis 9 of the rear wheel is positioned below the top surface of the platform 2. In one configuration, it passes through a side wall of the platform 2 and also through member 1, in a second configuration it is located to the rear of member 1 passing only through the platform walls while in a third configuration (as shown in Figures 1 and 2) it passes through member 1 only.

The centre pivot (6) attaching the link 4 to the base member 5 can pass beyond alignment with the pivots 8,13 so that it lies below these other two pivots, resulting in the centre locking of the base member 5 and the link 4 when the trolley is in its second operative position (Figure 2).

Suitable conventional latches and stops are included to fasten the moving components in the second operative position. At least one wheel 3,12 is fitted with a brake of known configuration and design (not shown) to prevent movement of the trolley; this brake may be applied to wheel 3.

Figures 1 and 2 show the trolley from one side only. The view from the other side corresponds to the view from the side shown. One, two or all three of members 1,5 and 10 may include cross-pieces, e.g. handles 14 and 16, that connect the two sides of the trolley, and the member(s) concerned may, for example be generally "U" shaped.

The trolley can be fabricated using standard techniques well-known in the art from aluminium alloy tubing with plastic injection moulded and/or die cast metal components.

## Claims

1. A trolley for the carriage of shopping or other goods embodying a platform on which a child may stand, comprising
a container (11), a member (1) for supporting the container (11) for said goods,
at least one first ground engaging wheel (3) which can freely rotate about an axis (9) located at the rear of said container,
a platform (2) located close to the wheel axis to support a standing child,
a handle (10,16) to push or pull the trolley, and
at least one second ground engaging wheel (12) forward of the at least one rear wheel (3,)
**characterised in that** the trolley is configured such that the handle and the container-supporting member are capable of adopting two operative positions, in the first operative position the container and handle are in their most upright position and the plane of the platform is at an unsuitable angle for a standing child, and in the second operative position the handle extends rearward and the container tilts forward away from its most upright position allowing the platform to adopt a substantially horizontal plane suitable for a standing child.

2. A trolley according to claim 1, wherein the at least one second ground engaging wheel (12) is configured such that it is not in ground engagement in the first operative position.

3. A trolley according to claim 1, wherein the at least one second ground engaging wheel (12) is configured such that it is in ground engagement in the second operative position.

4. A trolley according to any one of claims 1 to 3, wherein the at least one second ground engaging wheel (12) is a castor.

5. A trolley according to any one of claims 1 to 4, wherein at least one of the moving components essential to move when the trolley is changed between the two operative positions is fastened in place by suitable releasable latches and stops.

6. A trolley according to any one of claims 1 to 5, wherein at least one wheel (3,12) is fitted with a brake to prevent movement.

7. A trolley according to any preceding claim, wherein the said container (11) either has flexible or rigid walls.

8. A trolley according to any preceding claim, wherein the container-supporting member (1) and the handle (10) are pivotally connected (7) to form a scissor structure and, in said first operative position, the scissor structure is closed and in said second operative position, the scissor structure is open.

9. A trolley according to claim 8, wherein the container-supporting member (1) or the handle (10) includes a projection and wherein the pivotal connection (7) between the container-supporting member (1) and the handle (10) is located in a far end of said projection.

10. A trolley according to any preceding claim, which includes a foldable linkage (4,5,6) connected at a first end by a first pivot (8) to the container-supporting member (1) and at a second end by a second pivot (13) to the handle (10), which linkage is such that it is unfolded into an extended configuration in said second configuration.

11. A trolley according to claim 10, wherein the linkage includes two linkage elements (4,5) connected by a centre pivot (6) and wherein the linkage is configured such that the centre pivot (6) can pass beyond alignment with said first and second pivots (8,13) to be centre locked when the linkage is in said extended configuration.

12. A trolley according to claim 10 or claim 11, wherein the linkage (4,5,6) includes a part that, in said second configuration, extends forwardly of said second pivot (13) and wherein said at least one second ground engaging wheel (12) is attached to said extending part of the linkage.

13. A trolley according to any preceding claim, wherein the platform (2) is secured to a lower portion of the container-supporting member (1).

14. A trolley according to any preceding claim, wherein said at least one first ground-engaging wheel (3) is rotatable on an axle (9) that is supported either by a lower portion of the container-supporting member (1) or by the platform (2).

15. A trolley according to any preceding claim, wherein, in said second configuration, the axis (9) of said at least one first ground-engaging wheel (3) is located directly below or is located below and rearwardly of said platform (2).

## Patentansprüche

1. Transportwagen für die Beförderung von Einkaufswaren oder anderer Güter, der eine Plattform ausbildet, auf der ein Kind stehen kann, umfassend:
einen Behälter (11),
ein Element (1) zum Tragen des Behälters (11) für die Güter,
wenigstens ein erstes Bodeneingriffsrad (3), das sich frei um eine Achse (9) drehen kann, die sich auf der Rückseite des Behälters befindet,
eine Plattform (2), die sich nahe der Radachse befindet, um ein stehendes Kind zu tragen,
einen Griff (10, 16), um den Transportwagen zu schieben oder zu ziehen, und
wenigstens ein zweites Bodeneingriffsrad (12) vor dem wenigstens einen Hinterrad (3),
**dadurch gekennzeichnet, dass** der Transportwagen so ausgebildet ist, dass der Griff und das Behältertragelement in der Lage sind, zwei Betriebsstellungen einzunehmen, wobei sich in der ersten Betriebsstellung der Behälter und der Griff in ihrer aufrechtesten Stellung befinden und sich die Ebene der Plattform in einem ungeeigneten Winkel für ein stehendes Kind befindet, und sich in der zweiten Betriebsposition der Griff nach hinten erstreckt und sich der Behälter nach vorne aus seiner aufrechtesten Stellung neigt, die es der Plattform ermöglicht, eine im wesentlichen horizontale Ebene einzunehmen, die sich für ein stehendes Kind eignet.

2. Transportwagen nach Anspruch 1, bei dem das wenigstens eine zweite Bodeneingriffsrad (12) so ausgebildet ist, dass es in der ersten Betriebsstellung nicht in Bodeneingriff steht.

3. Transportwagen nach Anspruch 1, bei dem das wenigstens eine zweite Erdungseingriffsrad (12) so ausgebildet ist, dass es in der zweiten Betriebsstellung in Bodeneingriff steht.

4. Transportwagen nach einem der Ansprüche 1 bis 3, bei dem das wenigstens eine zweite Bodeneingriffsrad (12) eine Lenkrolle ist.

5. Transportwagen nach einem der Ansprüche 1 bis 4, bei dem wenigstens eines der beweglichen Bauteile, die sich wesentlich bewegen müssen, wenn sich der Transportwagen zwischen den beiden Betriebspositionen ändert, durch geeignete lösbare Riegel und Anschläge an Ort und Stelle befestigt wird.

6. Transportwagen nach einem der Ansprüche 1 bis 5, bei dem wenigstens ein Rad (3, 12) mit einer Bremse versehen ist, um eine Bewegung zu verhindern.

7. Transportwagen nach einem der vorhergehenden Ansprüche, bei dem der Behälter (11) entweder flexible oder starre Wände aufweist.

8. Transportwagen nach einem der vorhergehenden Ansprüche, bei dem das Behälter-Tragelement (1) und der Griff (10) schwenkbar verbunden sind (7), um eine Scherenstruktur auszubilden, und in der ersten Betriebsstellung die Scherenstruktur geschlossen ist und in der zweiten Betriebsstellung die Scherenstruktur geöffnet ist.

9. Transportwagen nach Anspruch 8, bei dem das Behälter-Tragelement (1) oder der Griff (10) einen Vorsprung aufweisen und sich die Schwenkverbindung (7) zwischen dem Behälter-Tragelement (1) und dem Griff (10) in einem entfernten Ende des Vorsprungs befindet.

10. Transportwagen nach einem der vorhergehenden Ansprüche, der ein klappbares Gestänge (4, 5, 6) aufweist, das an einem ersten Ende durch einen ersten Zapfen (8) mit dem Behältertragelement (1) und an einem zweiten Ende mit einem zweiten Zapfen (13) mit dem Griff (10) verbunden ist, wobei das Gestänge derart beschaffen ist, dass es in der zweiten Konfiguration in eine erweiterte Konfiguration entfaltet wird.

11. Transportwagen nach Anspruch 10, bei dem das Gestänge zwei Gestängeelemente (4, 5) aufweist, die durch einen Mittelzapfen (6) verbunden sind, wobei das Gestänge derart beschaffen ist, dass der Mittelzapfen (6) über die Ausrichtung mit dem ersten und dem zweiten Zapfen (8, 13) hinausgehen kann, um in der Mitte verriegelt zu werden, wenn sich das Gestänge in der entfalteten Konfiguration befindet.

12. Transportwagen nach Anspruch 10 oder 11, bei dem das Gestänge (4, 5, 6) einen Teil umfasst, der sich in der zweiten Konfiguration nach vorne von dem zweiten Zapfen (13) erstreckt, und das wenigstens eine zweite Bodeneingriffsrad (12) an dem verlängerten Teil des Gestänges befestigt ist.

13. Transportwagen nach einem der vorhergehenden Ansprüche, bei dem die Plattform (2) an einem unteren Abschnitt des Behältertragelementes (1) befestigt ist.

14. Transportwagen nach einem der vorhergehenden Ansprüche, bei dem das wenigstens eine erste Bodeneingriffsrad (3) auf einer Achse (9) drehbar ist, die entweder durch einen unteren Abschnitt des Behältertragelementes (1) oder durch die Plattform (2) gehalten ist.

15. Transportwagen nach einem der vorhergehenden Ansprüche, bei dem in der zweiten Konfiguration die Achse (9) des wenigstens einen ersten Bodeneingriffsrades (3) unmittelbar unterhalb oder unter und hinter der Plattform (2) angeordnet ist.

## Revendications

1. Chariot pour le transport de courses ou d'autres biens intégrant une plate-forme sur laquelle un enfant peut se positionner, comprenant
un contenant (11),
un organe (1) destiné à supporter le contenant (11) pour lesdits biens,
au moins une première roue en prise avec le sol (3) qui peut tourner librement autour d'un axe (9) situé à l'arrière dudit contenant,
une plate-forme (2) située près de l'axe de roue pour supporter un enfant positionné,
un manche (10, 16) pour pousser ou tirer le chariot, et
au moins une seconde roue en prise avec le sol (12) à l'avant de l'au moins une roue arrière (3),
**caractérisé en ce que** le chariot est configuré pour que le manche et l'organe de support de contenant soient capables d'adopter deux positions opérationnelles, dans la première position opérationnelle le contenant et le manche sont dans leur position la plus droite et le plan de la plate-forme fait un angle inapproprié pour un enfant positionné, et dans la seconde position opérationnelle, le manche s'étend vers l'arrière et le contenant s'incline vers l'avant en éloignement de la position la plus droite permettant à la plate-forme d'adopter un plan sensiblement horizontal convenant à un enfant positionné.

2. Chariot selon la revendication 1, dans lequel l'au moins une seconde roue en prise avec le sol (12) est configurée pour qu'elle ne soit pas en prise avec le sol dans la première position opérationnelle.

3. Chariot selon la revendication 1, dans lequel l'au moins une seconde roue en prise avec le sol (12) est configurée pour qu'elle soit en prise avec le sol dans la seconde position opérationnelle.

4. Chariot selon l'une quelconque des revendications 1 à 3, dans lequel l'au moins une seconde roue en prise avec le sol (12 est une roulette.

5. Chariot selon l'une quelconque des revendications 1 à 4, dans lequel au moins l'un des composants mobiles essentiels pour se déplacer lorsque le chariot est changé entre les deux positions opérationnelles est arrimé en place par des verrous et des arrêts libérables.

6. Chariot selon l'une quelconque des revendications 1 à 5, dans lequel au moins une roue (3, 12) est équipée d'un frein pour empêcher un mouvement.

7. Chariot selon l'une quelconque des revendications précédentes, dans lequel ledit contenant (11) comporte des parois soit flexibles soit rigides.

8. Chariot selon l'une quelconque des revendications précédentes, dans lequel l'organe de support de contenant (1) et le manche (10) sont raccordés en pivotement (7) pour former une structure en ciseaux et, dans ladite première position opérationnelle, la structure en ciseaux est fermée et dans la seconde position opérationnelle, la structure en ciseaux est ouverte.

9. Chariot selon la revendication 8, dans lequel l'organe de support de contenant (1) ou le manche (10) inclut une saillie et dans lequel le raccord pivotant (7) entre l'organe de support de contenant (1) et le manche (10) est situé à une extrémité éloignée de ladite saillie.

10. Chariot selon l'une quelconque des revendications précédentes, qui inclut une tringlerie pliable (4, 5, 6) raccordée au niveau d'une première extrémité par un premier pivot (8) à l'organe de support de contenant (1) et au niveau d'une seconde extrémité par un second pivot (13) au manche (10), laquelle tringlerie est telle qu'elle est dépliée dans une configuration étendue dans ladite seconde configuration.

11. Chariot selon la revendication 10, dans lequel la tringlerie inclut deux éléments de tringlerie (4, 5) raccordés par un pivot central (6) et dans lequel la tringlerie est configurée pour que le pivot central (6) puisse passer au-delà d'un alignement avec lesdits premier et second pivots (8, 13) pour être verrouillé centralement lorsque la tringlerie est dans ladite configuration étendue.

12. Chariot selon la revendication 10 ou la revendication 11, dans lequel la tringlerie (4, 5, 6) inclut une partie qui, dans ladite seconde configuration, s'étend vers l'avant dudit second pivot (13) et dans lequel ladite au moins une seconde roue en prise avec le sol (12) est attachée à ladite partie d'extension de la tringlerie.

13. Chariot selon l'une quelconque des revendications précédentes, dans lequel la plate-forme (2) est arrimée à une portion inférieure de l'organe de support de contenant (1).

14. Chariot selon l'une quelconque des revendications précédentes, dans lequel l'au moins une première roue en prise avec le sol (3) est rotative sur un essieu (9) qui est supporté soit par une portion inférieure de l'organe de support de contenant (1), soit par la plate-forme (2).

15. Chariot selon l'une quelconque des revendications précédentes, dans lequel, dans ladite seconde configuration, l'axe (9) de ladite au moins une première roue en prise avec le sol (3) est situé directement en dessous ou est situé en dessous et vers l'arrière de ladite plate-forme (2).
